(19) Europäisches Patentamt

European Patent Office

Office européen des brevets

(11) Veröffentlichungsnummer: **0 326 661**
**B1**

(12) **EUROPÄISCHE PATENTSCHRIFT**

(45) Veröffentlichungstag der Patentschrift: **23.01.91**

(21) Anmeldenummer: **88118710.8**

(22) Anmeldetag: **10.11.88**

(51) Int. Cl.⁵: **C 01 B 3/38,** C 01 B 3/48

(54) **Verfahren zur Erzeugung von Synthesegasen aus kohlenwasserstoffhaltigen Einsatzstoffen.**

(30) Priorität: **03.02.88 DE 3803080**

(43) Veröffentlichungstag der Anmeldung:
**09.08.89 Patentblatt 89/32**

(45) Bekanntmachung des Hinweises auf die
Patenterteilung:
**23.01.91 Patentblatt 91/04**

(84) Benannte Vertragsstaaten:
**BE DE ES FR IT NL**

(56) Entgegenhaltungen:
**EP-A-0 199 878**
**GB-A-2 067 175**
**US-A-2 029 604**

(73) Patentinhaber: **Uhde GmbH**
**Friedrich-Uhde-Strasse 15 Postfach 262**
**D-4600 Dortmund 1 (DE)**

(72) Erfinder: **Herbort, Hans-Joachim, Dipl.-Ing.**
**Unnaer Strasse 65B**
**D-5758 Fröndenberg (DE)**
Erfinder: **Thiagarajan, Natarajan, Dr., Dipl.-Ing.**
**Bömckestrasse 25**
**D-4600 Dortmund 1 (DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1 (DE)**

Courier Press, Leamington Spa, England.

**Beschreibung**

Die Erfindung richtet sich auf ein mehrstufiges Verfahren zur Erzeugung von $H_2$, CO und $CO_2$ enthaltenden Synthesegasen aus kohlenwasserstoffhaltigen Einsatzstoffen, bei dem (a) die Einsatzstoffe zunächst einer Primärdampfreformierung, (b) anschließend einer partiellen Oxidation mit Hilfe eines sauerstoffhaltigen Zusatzstoffes und (c) anschließend einer weiteren Dampfreformierung unterworfen werden und (d) wobei nachfolgend eine exotherme, katalytische Kohlenmonoxidumwandlung (CO-Konvertierung) durchgeführt wird.

Derartige Synthesegaserzeugungsverfahren sind z.B. bekannt aus der EP—A—0 178 007 oder der EP-A-0 212 758. Reaktoren zur mehrstufigen Erzeugung von $H_2$- und $CO_2$-haltigen Synthesegasen zeigen z.B. auch die US—PS 4 650 651 oder 3 549 305. Bei der US—PS 4 650 651 wird in den Reaktor von unten das kohlenstoff-wasserhaltige Einsatzgas eingebracht, es durchströmt einen Primärreformer, wird dann über ein Zentralrohr in die Spitze eines Sekundärreformers in einen Reaktionsraum verbracht, reagiert dort z.B. mit eingebrachter Luft, durchströmt nach unten den Sekundärreformer und umströmt auf seinem weiteren Weg nach unten den Primärreformer, um dann den Reaktor zu verlassen. Bei den eingangs genannten europäischen Anmeldungen erfolgt eine Weiterbehandlung des Synthesegases durch Beeinflussung des Kohlenmonoxids in einer CO-Konvertierung auf katalytischer Basis. Eine allgemeine Ausnutzung exothermer katalytischer Reaktionen zur Gasvorwärmung ist z.B. aus der US—A—2 029 604 bekannt.

Es hat sich gezeigt, daß die bekannten Verfahren optimiert werden können, insbesondere was ihre Wärmeausnutzung betrifft und die Möglichkeit, den $O_2$-Verbrauch bekannter Verfahren zu reduzieren sowie kompakte Anlagen zu bauen, insbesondere auch besonders kompakte Reaktoren, was Ziel der vorliegenden Erfindung ist.

Erreicht wird dieses Ziel bei einem Verfahren der eingangs bezeichneten Art dadurch, daß die Abwärme der exothermen Kohlenmonoxidumwandlung zur wenigstens teilweisen primären Dampfreformierung eingesetzt wird.

Mit der Erfindung wird erreicht, daß die Wärme der exothermen CO-Konvertierung optimal abgeführt wird und gleichzeitig einem für den Prozeß nützlichen zusätzlichen Verwendungszweck zuführbar ist, nämlich der primären Dampfreformierung, d.h. zumindest für einen Teil dieser primären Dampfreformierung. Damit kann eine dieser Wärmemenge entsprechende Sauerstoffmenge in der partiellen Oxidation eingesetzt werden. Damit wird es u.a. auch möglich, die CO-Konvertierung in den ohnehin benötigten Reaktoren vorzunehmen, wodurch es zur Schaffung wirtschaftlicher Anlageelemente kommt.

In Ausgestaltung sieht die Erfindung vor, daß die Primärdampfreformierung mehrstufig vorgenommen wird, womit wenigstens eine Stufe als CO-Konvertierungsstufe in Verbindung mit einem Teil der Dampfreformierung gestaltet werden kann.

Zu einer vorteilhaften Verfahrensführung trägt bei, wenn nach der Sekundärreformierung eine wenigstens teilweise $CO_2$-Abtrennung im weiteren Verfahren erfolgt. Hier sei bemerkt, daß diese Abtrennung nicht unmittelbar hinter der Sekundärdampfreformierung erfolgen muß, es können weitere Verfahrensschritte noch zwischengeschaltet sein.

Vorteilhaft ist es, wenn die $CO_2$-Abtrennung nach der katalytischen Kohlenmonoxidumwandlung vorgenommen wird. Ein besonderer Teil der Erfindung besteht darin, daß im ersten Teil der Primärdampfreformierung ein nickelhaltiger Katalysator auf Zinkoxidbasis und/oder im zweiten Teil der Primärdampfreformierung ein nickelhaltiger Katalysator auf Aluminiumoxidbasis eingesetzt wird, wie dies die Erfindung ebenfalls vorsieht, wobei die Temperaturtönung der Verfahrensweise im ersten Teil der primärdampfreformierung in einem Temperaturbereich von etwa 350 bis 650°C vorgenommen und/oder im zweiten Teil von etwa 600 bis 900°C liegen kann, wie dies die Erfindung ebenfalls vorsieht. Wenn die Temperaturbereiche in ihren Grenzen nicht exakt angegeben sind, so bedeutet dies, daß diese Grenzen je nach Gestaltung der Anlageteile und der sonstigen Verfahrensparameter auch über- bzw. unterschritten werden können.

In weiterer Ausgestaltung ist nach der Erfindung vorgesehen, daß in der partiellen Oxidationsstufe zusätzlich kohlenwasserstoffhaltiges Gas mit einem zusätzlichen Oxidationsmittel eingesetzt wird, wobei zusätzlich oder alternativ vorgesehen sein kann, daß auch Stickstoff und/oder Kohlendioxid und/oder Wasserdampf und/oder andere O-Atome führende Gase dem Verfahren, insbesondere der partiellen Oxidationsstufe, zugeführt werden.

Eine wesentliche Ausgestaltung der Erfindung liegt darin, daß die Produkte wenigstens zweier paralleler Synthesegaserzeugersträngen unterschiedlicher Zusammensetzung wenigstens teilweise zu einem Synthesegas anderer Zusammensetzung zusammengeführt und gemischt werden. Es hat sich gezeigt, daß zur Erzeugung von Produktströmen unterschiedlicher Zusammensetzung es durchaus zweckmäßig sein kann, unterschiedliche Synthesegaserzeugungsstränge zunächst parallel zu führen und die Produktergebnisse dann in den jeweils gewünschten Mengen und Zusammensetzungen so zusammenzumischen, daß ein Endprodukt der gewünschten Zusammensetzung erzeugt wird.

Diesem Gedanken trägt in Ausgestaltung die Erfindung zusätzlich dadurch Rechnung, daß die Zusammenführung der Synthesegasteilströme nach einer wenigstens teilweisen Abtrennung von CO bzw. $CO_2$ erfolgt, was insbesondere dann zweckmäßig sein kann, wenn z.B. in einem Synthesegaserzeugungsstrom eine CO-Konvertierung erfolgt, während in dem anderen Strang eine solche Konvertierung z.B. nicht vorgesehen ist.

Die Erfindung sieht auch vor, daß die abgetrennten CO und/oder $CO_2$-haltigen Gasträme in wenigstens einem der parallelen Synthesegaserzeugerstränge rezirkuliert werden.

Die Erfindung ist nachstehend anhand der Zeichnung beispielsweise näher erläutert. Diese zeigt in

Fig. 1 einen Verfahrensablauf in schematischer Darstellung,

Fig. 2 ein Rohrlängen-Temperatur-Verlaufsdiagramm in der Dampfreformierungsstufe,

Fig. 3 einen vereinfachten Schnitt durch einen Reaktor sowie in den

Fig. 4 und 5 abgewandelte Verfahrensabläufe in schematischer Darstellung.

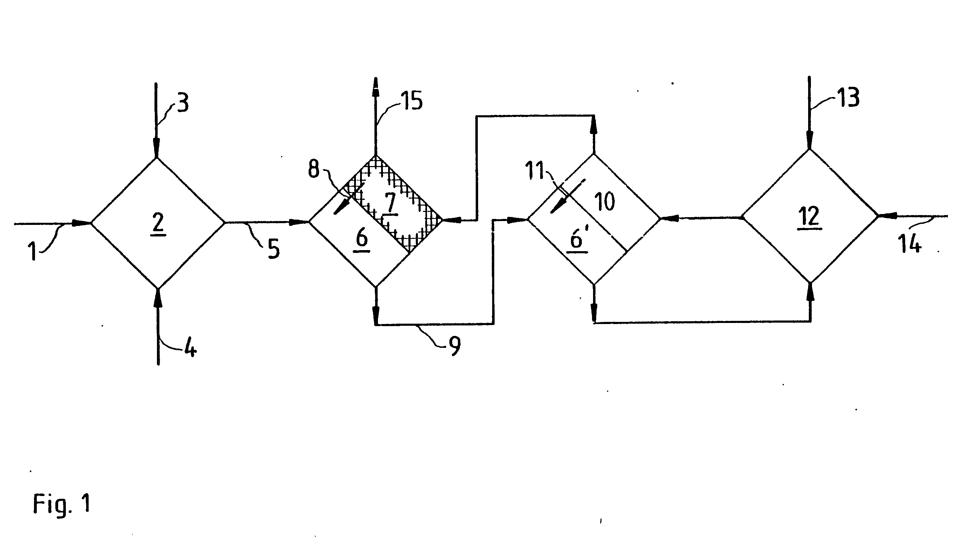

Bezugnehmend auf Fig. 1 wird von links bei 1 kohlenwasserstoffhaltiges Medium dem Prozeß zugeführt, wobei mit dem Bezugszeichen 2 ein Mischer und/oder Befeuchter angedeutet ist. Über eine Leitung 3 wird Wasser, z.B. in Dampfform, zugeführt, von unten über die Leitung 4 kann, wenn dies nützlich sein sollte, $N_2$ bzw. $CO_2$ zugeführt werden.

Das Medium wird dann über 5 einem Primärreformer 6 zugeführt, der im Wärmeaustausch mit der Abwärme einer exothermen Kohlenmonoxidumwandlung 7 steht, was durch den kleinen Pfeil 8 angedeutet ist.

Im dargestellten Beispiel ist der primärreformer in zwei Teilbereichen oder Zonen dargestellt, die mit 9 bezeichnete Verbindungsleitung ist symbolischer Natur und verbindet den ersten Teil des Primärreformers 6 mit dem zweiten Teil 6', der im Wärmeaustausch mit einer Sekundärreformierung 10 steht. Dieser Wärmeaustausch ist auch durch einen kleinen Pfeil, mit 11 bezeichnet, angedeutet.

Das den Primärreformer verlassende Medium wird einer partiellen Oxidation im Anlagenteil 12 zugeführt, wobei in Fig. 1 von oben ein Oxidationsmittel über die Leitung 13 zugeführt wird, etwa $O_2$. Es kann sich hierbei aber auch zusätzlich um andere zuzuführende Medien handeln, etwa $N_2$, $CO_2$ oder $H_2O$. Über eine Leitung 14 kann alternativ ein sekundärer kohlenwasserstoffhaltiger Teilstrom dem Prozeß zugeführt werden.

Es war schon erwähnt worden, daß das Medium dem Sekundärreformer 10 zugeführt wird, und zwar nach Verlassen der partiellen Oxidationsstufe 12. Das produktgas tritt dann in den Wärmeaustausch mit der Abwärme der exothermen Kohlenmonoxidumwandlung 7 zur ersten Stufe des Primärreformers 6 und verläßt zur weiteren Behandlung den Prozeß, was durch den Pfeil 15 angedeutet ist.

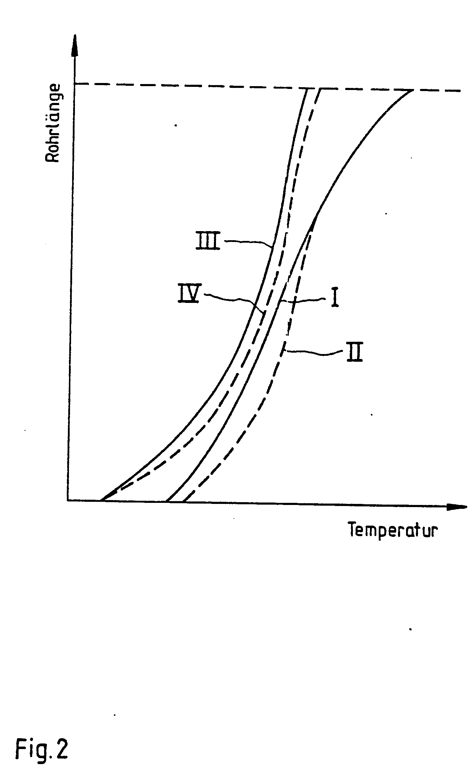

Die Fig. 2 zeigt einen qualitativen Temperaturverlauf der reagierenden Gase. Die durchgezogene Linie I bzw. III zeigt den Temperaturverlauf ohne erfindungsgemäßen Wärmeaustausch aus einer zusätzlichen Energiequelle, wie hier aus der Abwärme der exothermen Kohlenmonoxidumwandlung. Die gestrichelten Linien II und IV zeigen demgegenüber einen entsprechenden Temperaturverlauf, z.B. Primärkatalysator (IV) und Konvertierungskatalysator (II) nach der Erfindung.

Die erhöhte Austrittstemperatur aus der Primärreformierung (IV) führt zu der schon erwähnten Einsparung an teurem Sauerstoff in der nachfolgenden partiellen Oxidation, ohne das Wärmeangebot für die nachfolgende Sekundärreformierung zu beeinträchtigen, wie der unveränderte Beginn der Kurve II am oberen Ende verdeutlicht.

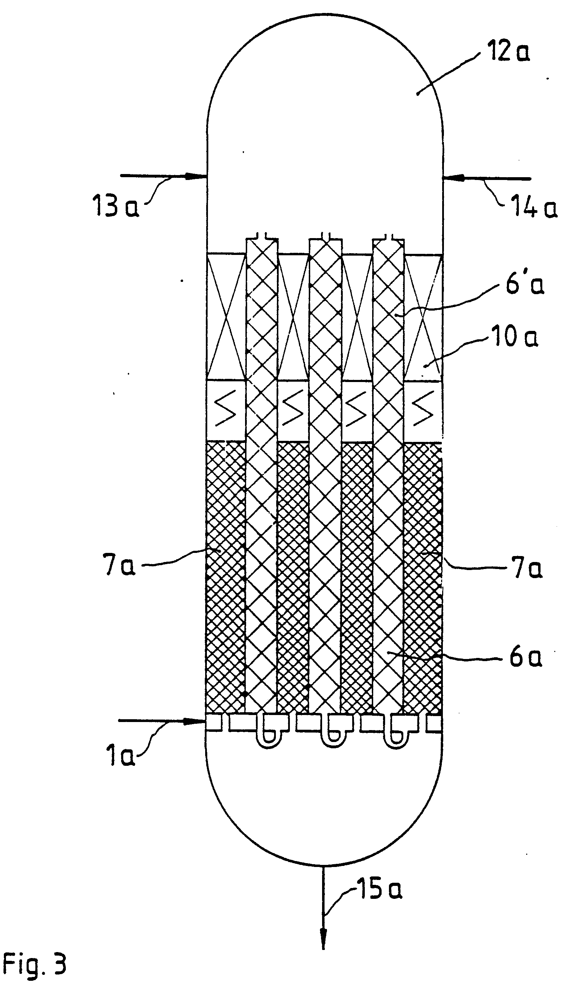

In Fig. 3 ist eine mögliche Bauart eines Reaktors dargestellt, wobei die in Fig. 1 benutzten Bezugszeichen dort soweit wie möglich ebenfalls mit verwendet werden, allerdings unter Hinzufügung des Buchstabens "a".

Entscheidend für die vorliegende Erfindung ist die Ausgestaltung wenigstens eines Teiles des Reaktors als Katalysator zur exothermen CO-Konvertierung. Dieser Katalysator ist in Fig. 3 mit 7a bezeichnet, dessen Abwärme der primären Dampfreformierung zur Verfügung steht.

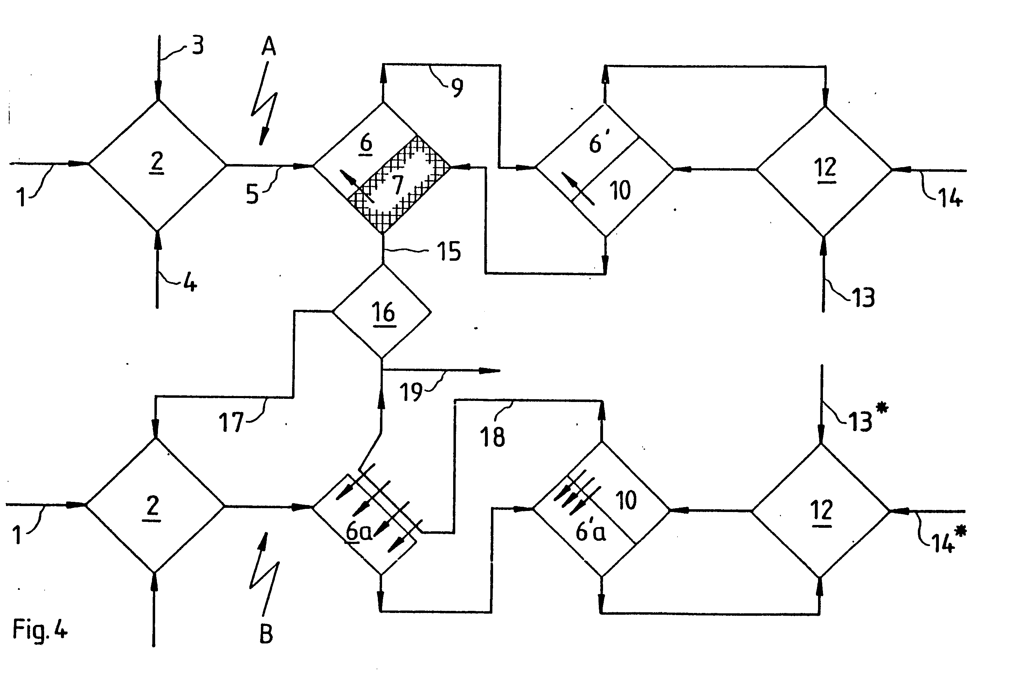

In Fig. 4 ist ein Systemschaltbild dargestellt mit im wesentlichen zwei parallelen Synthesegaserzeugersträngen, wobei der obere mit dem Buchstaben "A" bezeichnet ist, während der untere Strang mit dem Buchstaben "B" gekennzeichnet ist. Die im übrigen mit Fig. 1 identischen Bauteile sind hier ebenfalls gleich bezeichnet mit folgenden, für diese Verfahrensführung zusätzlichen Besonderheiten:

Der Strang A entspricht völlig dem Verfahrensablauf gemäß Fig. 1. Bei 15 wird der Strom einer wenigstens teilweisen Abtrennung von Kohlendioxid zugeführt, dieses Anlagenteil ist in Fig. 4 mit 16 bezeichnet. Der entsprechende Strom kann z.B. dem Strang B wieder zugeführt werden, was durch die Leitung 17 angedeutet ist.

Anders als im Strang A ist im Strang B die Möglichkeit dargestellt, nicht über eine exotherme CO-Konvertierung der primären Dampfreformierung Wärme zur Verfügung zu stellen, sondern dies kann, wie dargestellt, durch den die Dampfreformierung 10 verlassenden Strom geschehen, was durch eine Leitung 18 angedeutet ist. Die unterschiedlichen Anlageelemente 6 sind in diesem Falle mit 6a bezeichnet.

Erkennbar werden die Produktströme nach der $CO_2$-Abtrennung 16 und über die Leitung 18 einer gemeinsamen Leitung 19 zugeführt, die je nach Mischverhältnis und Strangauslegung jeweils unterschiedliche Produktgase, insbesondere was deren Qualität und Zusammensetzung angeht, der weiteren Verwendung zuführen kann.

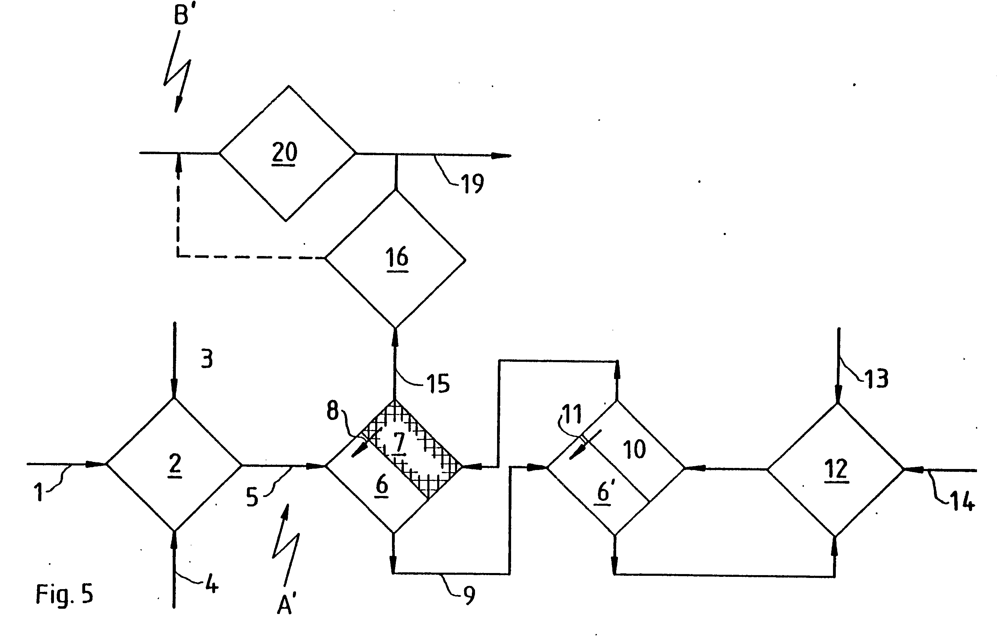

In Fig. 5 ist schließlich eine weitere Variation dargestellt, hier ist der Strang A' mit dem aus Fig. 4 bzw. Fig. 1 erneut wiederum völlig identisch. Der Strang B' besteht hier ällerdings lediglich aus einer partiellen, nicht katalytischen Oxidationsstufe. Diese Stufe trägt das Bezugszeichen 20. Auch hier kann eine $CO_2$-Abtrennung erfolgen, die dem Strom zur partiellen Oxidationsstufe vorab zugemischt werden kann, was gestrichelt angedeutet ist.

Natürlich sind die beschriebenen Ausführungsbeispiele der Erfindung noch in vielfacher Hinsicht abzuändern, ohne den Grundgedanken zu verlassen. So können insbesondere mehr als die beiden dargestellten Stränge A und B vorgesehen sein u. dgl. mehr.

**Patentansprüche**

1. Mehrstufiges Verfahren zur Erzeugung von $H_2$, CO und $CO_2$ enthaltenden Synthesegasen aus kohlenwasserstoffhalgen Einsatzstoffen, bei dem (a) die Einsatzstoffe zunächst einer Primärdampfreformierung, (b) anschließend einer partiellen Oxidation mit Hilfe eines sauerstoffhaltigen Zusatzstoffes und (c) anschließend einer weiteren Dampfreformierung unterworfen werden und (d) wobei nachfolgend eine exotherme, katalytische Kohlenmonoxidumwandlung (C0-Konvertierung) durchgeführt wird,
dadurch gekennzeichnet,
daß die Abwärme der exothermen Kohlenmonoxidumwandlung zur wenigstens teilweisen primären Dampfreformierung eingesetzt wird.

2. Mehrstufiges Verfahren nach Anspruch 1,
dadurch gekennzeichnet,
daß die Primärdampfreformierung mehrstufig vorgenommen wird.

3. Mehrstufiges Verfahren nach Anspruch 1 oder 2,
dadurch gekennzeichnet,
daß nach der Sekundärdampfreformierung eine wenigstens teilweise $CO_2$-Abtrennung im weiteren Verfahren erfolgt.

4. Mehrstufiges Verfahren nach Anspruch 3,
dadurch gekennzeichnet,
daß die $CO_2$-Abtrennung nach der katalytischen Kohlenmonoxidumwandlung vorgenommen wird.

5. Mehrstufiges Verfahren nach Anspruch 2 oder einem der folfolgenden Ansprüche,
dadurch gekennzeichnet,
daß im ersten Teil der Primärdampfreformierung ein nickelhaltiger Katalysator auf Zinkoxidbasis eingesetzt wird.

6. Mehrstufiges Verfahren nach Anspruch 5,
dadurch gekennzeichnet,
daß der erste Teil der Primärdampfreformierung in einem Temperaturbereich von etwa 350 bis 650°C vorgenommen wird.

7. Mehrstufiges Verfahren nach Anspruch 2 oder einem der folgenden Ansprüche,
dadurch gekennzeichnet,
daß im zweiten Teil der Primärdampfreformierungsstufe ein nickelhaltiger Katalysator auf Aluminiumoxidbasis eingesetzt wird.

8. Mehrstufiges Verfahren nach Anspruch 7,
dadurch gekennzeichnet,
daß der zweite Teil der Primärdampfreformierung in einem Temperaturbereich von etwa 600 bis 900°C vorgenommen wird.

9. Mehrstufiges Verfahren nach einem der vorangehenden Ansprüche,
dadurch gekennzeichnet,
daß in der partiellen Oxidationsstufe zusätzlich kohlenwasserstoffhaltiges Gas mit einem zusätzlichen Oxidationsmttel eingesetzt wird.

10. Mehrstufiges Verfahren nach Anspruch 9,
dadurch gekennzeichnet,
daß zusätzlich Stickstoff und/oder Kohlendioxid und/oder Wasserdampf und/oder andere O-Atome führende Gase zugeführt werden.

11. Mehrstufiges Verfahren nach einem der vorangehenden Ansprüche,
dadurch gekennzeichnet,
daß die Produkte wenigstens zweier paralleler Synthesegaserzeugerstränge unterschiedlicher Zusammensetzung wenigstens teilweise zu einem Synthesegas anderer Zusammensetzung zusammengeführt und gemischt werden.

12. Mehrstufiges Verfahren nach Anspruch 11,
dadurch gekennzeichnet,
daß die Zusammenführung der Synthesegasteilströme nach einer wenigstens teilweisen Abtrennung von CO bzw. $CO_2$ erfolgt.

13. Mehrstufiges Verfahren nach Anspruch 11 oder 12,
dadurch gekennzeichnet,
daß das abgetrennte CO und/oder $CO_2$-haltige Gas in wenigstens einem der parallelen Synthesegaserzeugerstränge rezierkuliert werden.

**Revendications**

1. Procédé à plusieurs étapes pour la production de gaz de synthèse contenant $H_2$, CO et $CO_2$ à partir de charges hydrocarbonées, dans lequel (a) les charges subissent d'abord un reformage à la vapeur primaire, (b) puis une oxydation partielle à l'aide d'un additif contenant de l'oxygène et (c) ensuite un autre reformage à la vapeur et (d) dans lequel on réalise ensuite une conversion catalytique, exothermique du monoxyde de carbone (conversion de CO), caractérisé en ce que la chaleur perdue de la conversion exothermi'que du monoxyde de carbone est utilisée pour le reformage à la vapeur primaire au moins partiel.

2. Procédé à plusieurs étapes selon la revendication 1, caractérisé en ce que le reformage à la vapeur primaire est réalisé en plusieurs étapes.

3. Procédé à plusieurs étapes selon la revendication 1 ou 2, caractérisé en ce qu'une séparation au moins partielle de $CO_2$ a lieu dans la suite du procédé après le reformage à la vapeur secondaire.

4. Procédé à plusieurs étapes selon la revendication 3, caractérisé en ce que la séparation de $CO_2$ est réalisée après la conversion catalytique du monoxyde de carbone.

5. Procédé à plusieurs étapes selon la revendication 2 ou l'une des revendications suivantes, caractérisé en ce qu'un catalyseur à base d'oxyde de zinc contenant du nickel est utilisé dans la première partie du reformage à la vapeur primaire.

6. Procédé à plusieurs étapes selon la revendication 5, caractérisé en ce que la première partie du reformage à la vapeur primaire est réalisée dans une gamme de température d'environ 350 à 650°C.

7. Procédé à plusieurs étapes selon la revendication 2 ou l'une des revendications suivantes, caractérisé en ce qu'un catalyseur à base d'oxyde d'aluminium contenant du nickel est utilisé dans la deuxième partie de l'étape de reformage à la vapeur primaire.

8. Procédé à plusieurs étapes selon la revendication 7, caractérisé en ce que la deuxième partie du reformage à la vapeur primaire est réalisée dans une gamme de température d'environ 600 à 900°C.

9. Procédé à plusieurs étapes selon l'une des revendications précédentes, caractérisé en ce qu'un supplément de gaz hydrocarboné est utilisé avec un oxydant supplémentaire dans l'étape d'oxydation partielle.

10. Procédé à plusieurs étapes selon la revendication 9, caractérisé en ce que de l'azote et/ou du dioxyde de carbone et/ou de la vapeur d'eau et/ou d'autres gaz contenant des atomes de oxygène sont introduits en plus.

11. Procédé à plusieurs étapes selon l'une des revendications précédentes, caractérisé en ce que les produits d'au moins deux lignes parallèles de générateurs de gaz de synthèse de compositions différentes sont envoyés conjointement et mélangés au moins en partie à un gaz de synthèse de composition différente.

12. Procédé à plusieurs étapes selon la revendication 11, caractérisé en ce que l'envoi conjoint des courants partiels de gaz de synthèse a lieu après une séparation au moins partielle de CO ou de $CO_2$.

13. Procédé à plusieurs étapes selon la revendication 11 ou 12, caractérisé en ce que le gaz séparé contenant CO et/ou $CO_2$ est amené à recirculer dans au moins l'une des lignes parallèles de générateurs de gaz de synthèse.

## Claims

1. Multiple stage process for generating $H_2$, CO and $CO_2$-containing synthesis gases composed of substances containing hydrocarbons, according to which (a) the starting substances are first subjected to primary steam reformation, (b) then to partial oxidation by means of an acid-containing additive and (c) then to further steam reformation and (d) subsequently an exothermic, catalytic carbon monoxide conversion is carried out, characterised in that the heat given off by the exothermic carbon monoxide conversion is used for at least partial primary steam reformation.

2. Multiple stage process according to claim 1, characterised in that the primary steam reformation is undertaken in multiple stages.

3. Multiple stage process according to claim 1 or 2, characterised in that after the secondary steam reformation, at least partial $CO_2$ separation is carried out in subsequent processing.

4. Multiple stage process according to claim 3, characterised in that $CO_2$ separation is carried out after the catalytic carbon monoxide conversion.

5. Multiple stage process according to claim 2 or one of the subsequent claims, characterised in that in the first part of the primary steam reformation a nickel-containing catalyst with a zinc oxide base is used.

6. Multiple stage process according to claim 5, characterised in that the first part of the primary steam reformation is carried out in a temperature range of approximately 350 to 650°C.

7. Multiple stage process according to claim 2 or one of the subsequent claims, characterised in that in the second part of the primary steam reformation stage, a nickel-containing catalyst with an aluminium oxide base is used.

8. Multiple stage process according to claim 7, characterised in that the second part of the primary steam reformation is carried out in a temperature range of approximately 600 to 900°C.

9. Multiple stage process according to one of the preceding claims, characterised in that in the partial oxidation stage, additionally hydrocarbon-containing gas with an additional oxidising agent is used.

10. Multiple stage process according to claim 9, characterised in that additionally nitrogen and/or carbon dioxide and/or steam and/or other gases carrying oxygene atoms are added.

11. Multiple stage process according to one of the preceding claims, characterised in that the products of at least two parallel synthesis gas generator strands of different composition are at least in part added and mixed to a synthesis gas of another composition.

12. Multiple stage process according to claim 11, characterised in that the synthesis gas partial streams are added after at least partial separation of CO or $CO_2$ respectively.

13. Multiple stage process according to claim 11 or 12, characterised in that the separated CO and/or $CO_2$-containing gas is recycled in at least one of the parallel synthesis gas generator strands.

Fig. 1

1

Fig.2

Fig. 3

Fig.4

Fig. 5